# EUROPEAN PATENT APPLICATION

(11) **EP 4 517 568 A1**
(43) Date of publication of application: **05.03.2025**
(21) Application number: 24191306.0
(22) Date of filing: 26.07.2024
(51) Int. Cl.: G06F 21/55, G06F 12/14, G06F 21/79

(54) **APPARATUS AND METHOD FOR PROTECTING MEMORY**

(30) Priority: 31.08.2023 KR 20230115261
(71) Applicant: SAMSUNG SDI CO., LTD., Giheung-gu Yongin-si, Gyeonggi-do 17084 (KR)
(72) Inventor: KIM, Min Su, 16678 Suwon-si (KR)
(74) Representative: Marks & Clerk LLP

(57) **Abstract**

The present invention relates to an apparatus and method for protecting a memory. The apparatus may include a monitoring unit configured to monitor pieces of status data of an integrated circuit (IC) chip, and a processor configured to analyze the pieces of status data monitored by the monitoring unit to detect a cold boot attack on the IC chip and protect a memory in the IC chip from the cold boot attack according to a detection result.

## Description

### BACKGROUND

### 1. Field

Aspects of embodiments of the present disclosure relate to an apparatus and method of protecting a memory.

### 2. Description of the Related Art

Cold boot attacks are one method of maliciously extracting information. Cold boot attacks cool a memory chip to freeze data, make the data temporarily maintained even after a system is shut down, and then read the data. Cold boot attacks require very complex and specialized skills, but are a threat that may be realized by attackers who have sufficient resources and expert knowledge.

A way to defend against cold boot attacks is to encrypt a memory to make data unreadable by attackers. However, such a way places a burden on system performance, and an encryption key itself may be vulnerable to attacks. In particular, real-time memory encryption may be burdensome in a battery management system (BMS) belonging to an embedded system that is sensitive to a central processing unit (CPU) load rate.

Another way to defend against cold boot attacks is to clear a memory when a system shuts down. Such a way erases data stored in a memory as soon as a system is shut down, making the data unreadable by attackers. However, such a way may not be effective when a system is shut down unexpectedly.

The background technology of the present invention is disclosed in "Memory and Memory System," Korean Patent Publication No. 10-2021-0081009 (published on July 1, 2021).

### SUMMARY

The present invention is directed to providing an apparatus and method for protecting a memory in which a memory is safely protected from a cold boot attack.

According to an aspect of the present invention, there is provided an apparatus for protecting a memory, the apparatus including a monitoring unit configured to monitor pieces of status data of an integrated circuit (IC) chip, and a processor configured to analyze the status data monitored by the monitoring unit to detect a cold boot attack on the IC chip and protect a memory in the IC chip from the cold boot attack according to a detection result.

The monitoring unit may monitor at least one of power consumption, current consumption, voltage changes, and system performance changes of the IC chip.

The processor may compare each pattern of the status data with a setting pattern set for each pattern to extract similarity and may detect the cold boot attack according to the similarity.

When the similarity of at least one of the pieces of status data is greater than or equal to a preset reference value, the processor may determine that the cold boot attack has been made.

The processor may compare the status data with a critical range preset for each status data to detect the cold boot attack according to a comparison result.

When at least one of the pieces of status data is out of the critical range, the processor may determine that the cold boot attack has been made.

When the cold boot attack is detected, the processor may increase a temperature of the IC chip.

The processor may overclock the IC chip.

When the cold boot attack is detected, the processor may protect data of the memory in the IC chip.

The processor may replace the data of the memory in the IC chip with null data.

According to another aspect of the present invention, there is provided a method of protecting a memory, the method including monitoring, by a monitoring unit, pieces of status data of an IC chip, analyzing, by a processor, the pieces of status data monitored by the monitoring unit to detect a cold boot attack on the IC chip, and protecting, by the processor, a memory in the IC chip from the cold boot attack according to a detection result.

In the monitoring of the status data of the IC chip, the monitoring unit may monitor at least one of power consumption, current consumption, voltage changes, and system performance changes of the IC chip.

In the detecting of the cold boot attack, the processor may compare each pattern of the pieces of status data with a setting pattern set for each pattern to extract similarity and may detect the cold boot attack according to the similarity.

In the detecting of the cold boot attack, when the similarity of at least one of the pieces of status data is greater than or equal to a preset reference value, the processor may determine that the cold boot attack has been made.

In the detecting of the cold boot attack, the processor may compare the status data with a critical range set for each status data to detect the cold boot attack according to a comparison result.

In the detecting of the cold boot attack, when at least one of the pieces of status data is out of the critical range, the processor may determine that the cold boot attack has been made.

In the protecting of the memory of the IC chip, when the cold boot attack is detected, the processor may increase a temperature of the IC chip.

In the protecting of the memory of the IC chip, the processor may overclock the IC chip.

In the protecting of the memory of the IC chip, when the cold boot attack is detected, the processor may protect data of the memory in the IC chip.

In the protecting of the memory of the IC chip, the processor may replace the data of the memory in the IC chip with null data.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a block diagram of an apparatus for protecting a memory according to one embodiment of the present invention;
FIG. 2 is a diagram illustrating a structure of a machine learning model according to one embodiment of the present invention;
FIG. 3 is an example diagram of pieces of status data according to one embodiment of the present invention;
FIG. 4 is a diagram illustrating a result of analyzing the pieces of status data according to one embodiment of the present invention;
FIG. 5 is a flowchart of a method of protecting a memory according to one embodiment of the present invention; and
FIG. 6 is a flowchart illustrating a data protecting process of FIG. 5.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Hereinafter, an apparatus and a method for protecting a memory according to one embodiment of the present invention will be described in detail with reference to the accompanying drawings. The drawings are not necessarily to scale and in some instances, proportions may have been exaggerated in order to clearly illustrate features of the embodiments. Further, the terms to be described below are terms defined in consideration of functions in the present invention and thus may vary according to intentions of users or operators or customs. Accordingly, the definitions of such terms should be made based on the content throughout the specification.

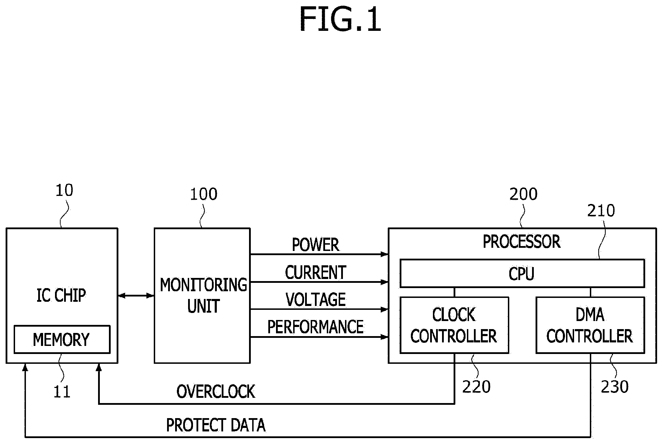

FIG. 1 is a block diagram of an apparatus for protecting a memory according to one embodiment of the present invention.

Referring to FIG. 1, the apparatus for protecting a memory according to one embodiment of the present invention includes a monitoring unit 100 and a processor 200.

The monitoring unit 100 may monitor pieces of status data of an integrated circuit (IC) chip 10.

The pieces of status data may be data related to a temperature change of the IC chip 10 due to a cold boot attack. The status data may include power consumption, current consumption, voltage changes, and system performance changes of the IC chip 10. This will be described below.

The IC chip 10 may be provided as various types of IC chips 10 mounted on a variety of hardware such as a computer, a portable terminal, or a system. The type of the IC chip 10 or hardware in which the IC chip 10 is mounted is not particularly limited.

When a temperature of the IC chip 10 decreases due to a cold boot attack, symptoms such as a change in material properties, a timing error, physical damage, and data loss may occur in the IC chip 10.

The characteristics of semiconductor devices may change under low temperature conditions. Under low temperature conditions, characteristics such as power consumption, current consumption, and voltage changes may become unstable, which may affect central processing unit (CPU) performance.

The operation of digital circuits is very sensitive to a precise timing. A timing error may occur when a temperature changes abruptly or a propagation delay time of a circuit changes. Such a timing error may reduce a calculation ability of a CPU or may cause incorrect calculation results.

Semiconductor elements are designed to operate normally only within a specific temperature range. Therefore, when a CPU cools abruptly, physical damage may occur to the semiconductor element. This may cause performance degradation or complete failure of the CPU.

When a memory in the CPU cools abruptly, data in the memory may be lost or altered. This may result in losing data a user is working on.

Accordingly, the monitoring unit 100 may monitor power consumption, current consumption, voltage changes, and system performance changes of the IC chip 10 using a machine learning model. Pieces of status data monitored by the monitoring unit 100 is not particularly limited.

The processor 200 may analyze the pieces of status data monitored by the monitoring unit 100 through a machine learning model to detect a cold boot attack on the IC chip 10 and may protect a memory of the IC chip 10 from the cold boot attack according to a detection result.

The processor 200 may include a control unit, such as CPU 210, a clock controller 220, and a direct memory access (DMA) controller 230.

The control unit 210 may detect a cold boot attack on the IC chip 10 by analyzing the status data monitored by the monitoring unit 100 through a machine learning model.

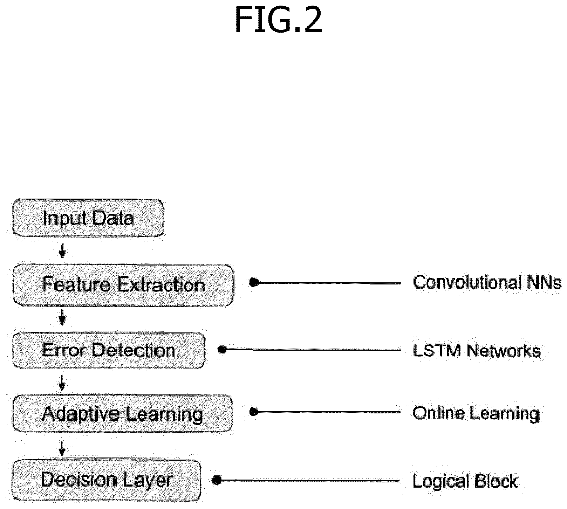

FIG. 2 is a diagram illustrating a structure of a machine learning model according to one embodiment of the present invention.

The machine learning model is configured to perform feature extraction in which features are extracted from the input data. Referring to FIG. 2, the machine learning model may include convolutional neural networks (convolutional NNs) that receive the above-described power consumption, current consumption, voltage changes, and system performance changes as input data. The CNNs are used to extract patterns from the input data.

A long short-term memory (LSTM) network may detect errors from the input data. Referring to Figure 2, the LSTM network may receive the output from the CNNs (i.e. the features extracted from the input data). Alternatively, the LSTM network may receive the input data directly and either pass the LSTM network output to the CNNs or the output from the LSTM network may be combined with the output of the CNNs that receive the input data.

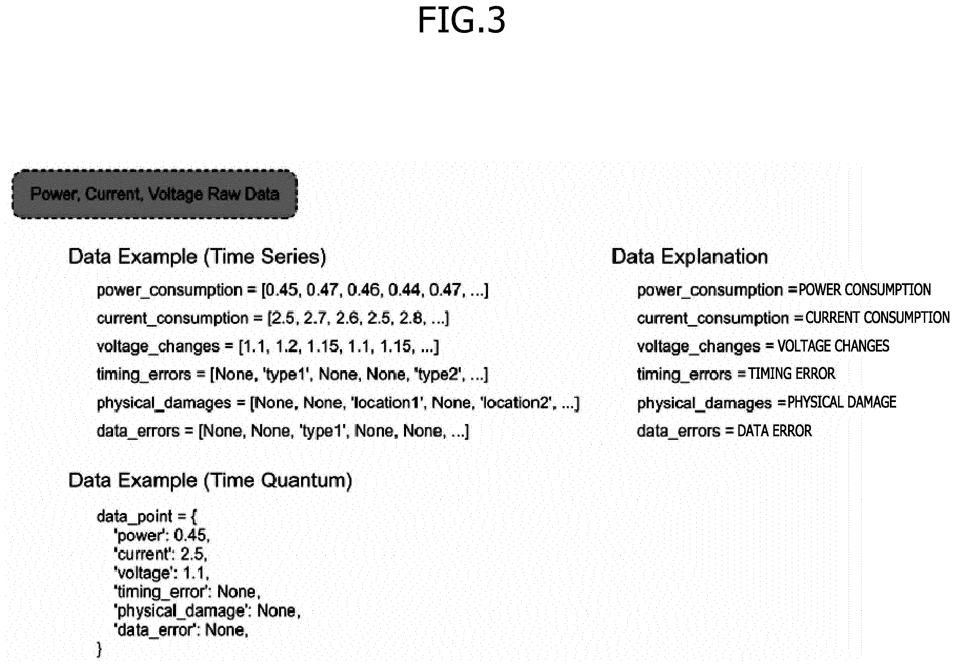

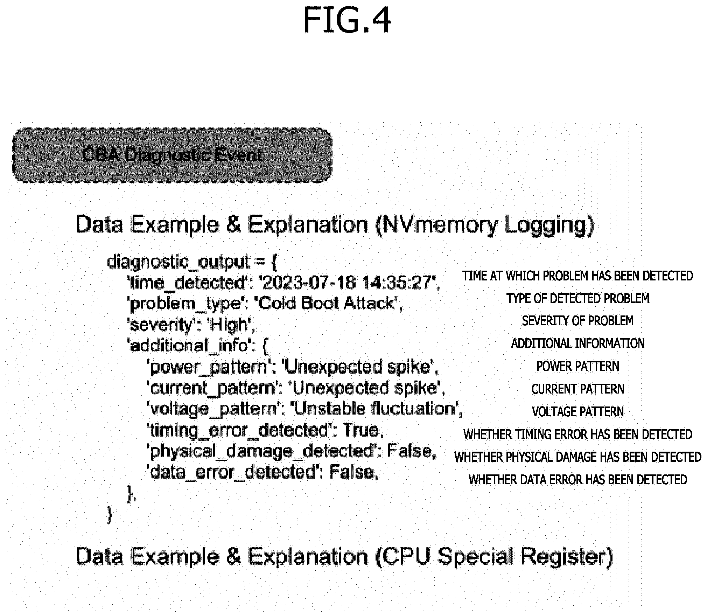

A change in CPU characteristics over time may be learned through online learning. In online learning, training data is continually provided to the machine learning model to train the machine learning model to recognize CPU characteristics. For example, training data samples may be provided for each of the above-described power consumption, current consumption, voltage changes, and system performance changes, which each example of training data labelled according to the status of the memory device and whether the data is indicative of a cold boot attack. For example, data similar to that shown in Figure 3 and an output such as that shown in Figure 4 may be used as an instance of training data for the machine learning model.

Referring to Figure 2, the machine learning model includes a logical block as a decision layer that may determine the possibility of a cold boot attack by combining information obtained through such a process. Once the machine learning model has been trained on the training samples, the machine learning model is configured to be able to identify cold boot attacks from input status information.

Specifically, the control unit 210 may receive pieces of status data monitored by the monitoring unit 100.

The control unit 210 may detect a cold boot attack by analyzing the pieces of status data through the above-described machine learning model.

FIG. 3 is an example diagram of pieces of status data according to one embodiment of the present invention.

Referring to FIG. 3, as the pieces of status data, power consumption, current consumption, voltage changes, and system performance changes of the IC chip 10 are shown. The system performance changes may include timing errors, physical damage, and data errors.

The control unit 210 may detect a cold boot attack based on the power consumption, the current consumption, the voltage change, and the system performance change of the IC chip 10 through a machine learning model.

As an alternative, or in combination with the machine learning model, the control unit 210 may compare each status data with a critical range preset for each status data to detect a cold boot attack according to a comparison result.

A critical range for detecting a cold boot attack may be set for each of the power consumption, the current consumption, the voltage change, and the system performance change of the IC chip 10. That is, a power consumption critical range, a current consumption critical range, a voltage change critical range, and a system performance change critical range may be set.

The control unit 210 may detect a cold boot attack according to a comparison result obtained by comparing at least one of the power consumption, the current consumption, the voltage change, and the system performance change with the critical range preset for each of the power consumption, the current consumption, the voltage change, and the system performance change.

That is, when an amount of the power consumption of the IC chip 10 is out of the power consumption critical range, an amount of the current consumption is out of the current consumption critical range, an amount of the voltage change is out of the voltage change critical range, or an amount of the system performance change is out of the system performance change critical range, the control unit 210 may determine that a cold boot attack has been made. A cold boot attack may be recognized by any one of the above values being out of the critical range, but in optional embodiments a cold boot attack is identified when more than one value is identified as being out of the critical range. Using multiple values reduces the likelihood of false positives occurring and unnecessary protection measures being carried out.

The control unit may receive data from the monitoring unit 100 that includes one or more patterns of data and/or may be configured to extract one or more patterns from the received data. A pattern of data may be a single monitored value at multiple time points, and/or may be a group of monitored values for a single time point. For example, voltage changes of a single component over time, and/or a plurality of voltage changes from a corresponding plurality of components on the memory device. In addition to the above cold boot attack detection methods, the control unit 210 may compare each pattern of status data with a setting pattern set for each pattern to extract similarity and may detect a cold boot attack based on the similarity.

That is, a pattern for detecting a cold boot attack may be set for each of the power consumption, the current consumption, the voltage change, and the system performance change. That is, a power consumption setting pattern, a current consumption setting pattern, a voltage change setting pattern, and a system performance change setting pattern may be set.

The control unit 210 may extract or receive a power consumption pattern, a current consumption pattern, a voltage change pattern, and a system performance change pattern.

The control unit 210 may extract respective similarities by respectively comparing the power consumption pattern, the current consumption pattern, the voltage change pattern, and the system performance change pattern with the power consumption setting pattern, the current consumption setting pattern, the voltage change setting pattern, and the system performance change setting pattern. For example, a statistical correlation between the data pattern and the setting pattern may be determined to quantify the level of similarity.

In this case, when the similarity between the power consumption pattern and the power consumption setting pattern is greater than or equal to a preset reference value (e.g. a correlation parameter value), the pattern similarity between the current consumption pattern and the current consumption setting pattern is greater than or equal to a reference value (e.g. a correlation parameter value), the similarity between the voltage change pattern and the voltage change setting pattern is greater than or equal to a reference value (e.g. a correlation parameter value), or the similarity between the system performance change pattern and the system performance change setting pattern is greater than or equal to a reference value (e.g. a correlation parameter value), the control unit 210 may determine that a cold boot attack has been made. A cold boot attack may be recognized by any one of the above patterns is deemed to be similar to the corresponding setting pattern, but in optional embodiments a cold boot attack is identified when more than one pattern is identified as being similar to the respective setting pattern. Using multiple pattern similarities reduces the likelihood of false positives occurring and unnecessary protection measures being carried out.

Here, the reference value may be a preset similarity for detecting a cold boot attack. The reference values may be set identically or differently for the power consumption pattern, the current consumption pattern, the voltage consumption pattern, and the system performance change pattern.

FIG. 4 is a diagram illustrating a result of analyzing pieces of status data according to one embodiment of the present invention.

Referring to FIG. 4, as the result of analyzing the pieces of status data, a time at which a problem has been detected, a type of the detected problem, a severity of the problem, additional information, a power pattern, a current pattern, a voltage pattern, whether a timing error has been detected, whether physical damage has been detected, and whether a data error has been detected are shown.

When a cold boot attack is detected, the control unit 210 controls the clock controller 220 and the DMA controller 230 to protect the memory of the IC chip 10 from the cold boot attack.

The clock controller 220 overclocks the IC chip 10 according to a control signal of the control unit 210 to temporarily increase a clock speed of the IC chip 10, thereby causing a temperature of the IC chip 10 to abruptly increase.

The control unit 210 may perform alternative operations to raise the temperature of the IC chip 10 in response to the detection of a cold boot attack. For example, the control unit 210 may drive one or more heat producing elements (such as resistors) to increase the IC chip temperature.

The DMA controller 230 executes a predefined memory copy algorithm according to a control signal of the control unit 210 to instantaneously copy null data into data of a memory area in the IC chip 10. The null data overwrites the data in the memory area of the IC chip, thereby protecting data stored in the memory from being read by the malicious third party.

Although, in the present embodiment, to facilitate understanding of the embodiment, the control unit 210, the clock controller 220, and the DMA controller 230 are described as separate components in the processor 200, according to embodiments, the processor 200 is configured to integrate them as respective sub-components.

In the present embodiment, the processor 200 may be a device that diagnoses a battery system (BAT), may be implemented as a CPU or a system-on-chip (SoC), may control a plurality of hardware or software components connected to the processor 200 by running an operating system or application, and may perform processing and calculating on various types of data. The processor 200 may be configured to execute at least one instruction stored in the memory and store execution result data in the memory.

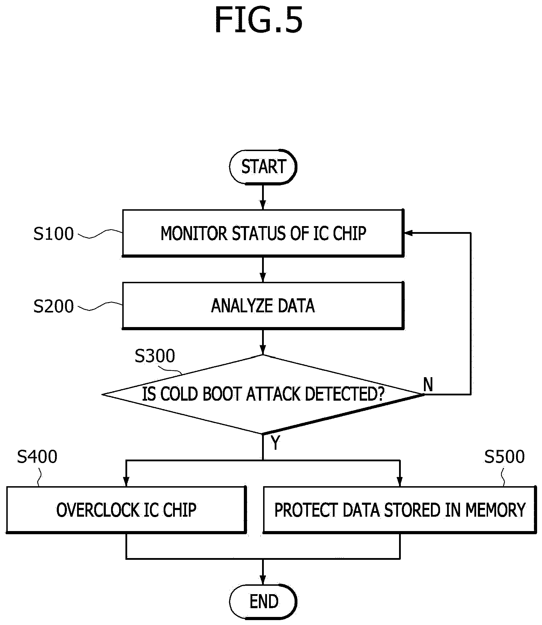

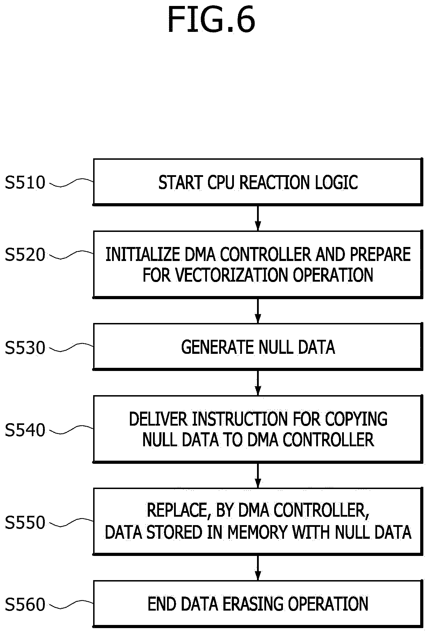

Hereinafter, a method of protecting a memory according to one embodiment of the present invention will be described with reference to FIGS. 5 and 6.

FIG. 5 is a flowchart of the method of protecting a memory according to one embodiment of the present invention.

Referring to FIG. 5, the monitoring unit 100 may monitor pieces of status data of the IC chip 10 related to a temperature change of the IC chip 10 due to a cold boot attack.

In this case, the monitoring unit 100 may monitor power consumption, current consumption, voltage changes, and system performance changes of the IC chip 10 using a machine learning model (S 100).

The control unit 210 may detect the cold boot attack by analyzing the pieces of status data monitored by the monitoring unit 100, that is, the power consumption, the current consumption, the voltage changes, and the system performance changes of the IC chip 10 (S200 and S300).

In this case, the control unit 210 may compare each status data with a critical range preset for each status data to detect the cold boot attack according to a comparison result. For example, when the power consumption of the IC chip 10 is out of a power consumption critical range, the current consumption is out of a current consumption critical range, the voltage change is out of a voltage change critical range, or the system performance change is out of a system performance change critical range, the control unit 210 may determine that the cold boot attack has been made.

In addition, the control unit 210 may compare each pattern of the status data with a setting pattern set for each pattern to extract pattern similarity and may detect the cold boot attack. For example, when the similarity between a power consumption pattern and a power consumption setting pattern is greater than or equal to a preset reference value, the pattern similarity between a current consumption pattern and a current consumption setting pattern is greater than or equal to a reference value, the similarity between a voltage change pattern and a voltage change setting pattern is greater than or equal to a reference value, or the similarity between a system performance change pattern and a system performance change setting pattern is greater than or equal to a reference value, the control unit 210 may determine that the cold boot attack has been made.

When a cold boot attack has been detected, the control unit 210 may overclock the IC chip 10 through the clock controller 220 (S400) to abruptly increase a temperature of the IC chip 10.

In addition, the control unit 210 may instantaneously copy null data into data of a memory area inside the IC chip 10 to protect data stored in the memory (S500). By also performing the temperature rise in response to the detection of the cold boot attack, the temperature of the memory device can be temporarily stabilized against the physical cooling of the device under attack, to provide additional time to perform the memory erase operation of S500 and thus protect the data.

FIG. 6 is a flowchart illustrating a data protecting process of FIG. 5.

Referring to FIG. 6, first, the control unit 210 detects that a bit value of a special register reserved for a cold boot attack reaction only is set to 1 and starts a reaction logic (S510).

The control unit 210 initializes the DMA controller 230 and prepares for a vectorization operation (S520).

The control unit 210 generates null data (S530). The null data is data to be copied to the memory of the IC chip 10.

The control unit 210 transmits an instruction for copying the null data into the memory of the IC chip 10 to the DMA controller 230 (S540). In this case, the vectorization operation may be used.

The DMA controller 230 quickly replaces data stored in the memory of the IC chip 10 with the null data (S550).

The DMA controller 230 ends a data erasing operation when the data of the IC chip 10 is replaced with the null data (S560).

As used herein, the term "unit or module" may include a unit implemented in hardware, software, or firmware, and may interchangeably be used with other terms, for example, logic, logic block, part, or circuitry. A unit or a module may be a single integral component, or a minimum unit or part thereof, adapted to perform one or more functions. For example, according to one embodiment, a "unit or a module" may be implemented in a form of an application-specific integrated circuit (ASIC).

In this way, according to an apparatus and method for protecting a memory according to one embodiment of the present invention, a memory and data can be safely protected from cold boot attacks.

In addition, an apparatus and method for protecting a memory according to one embodiment of the present invention can ensure effective attack defense while maintaining a safe operating range of an IC chip.

Implementations described herein may be implemented in, for example, a method or process, an apparatus, a software program, a data stream, or a signal. Although discussed only in the context of a single form of implementation (e.g., discussed only as a method), implementations of the discussed features may also be implemented in other forms (for example, an apparatus or a program). The apparatus may be implemented in suitable hardware, software, firmware, and the like. A method may be implemented in an apparatus such as a processor, which is generally a computer, a microprocessor, an integrated circuit, a processing device including a programmable logic device, or the like. Processors also include communication devices such as a computer, a cell phone, a portable/personal digital assistant ("PDA"), and other devices that facilitate communication of information between end-users.

The present disclosure has been described with reference to embodiments shown in the drawings, but this is merely illustrative, and those skilled in the art will understand that various modifications and other equivalent embodiments are possible therefrom. Therefore, the technical protection scope of the present invention should be defined by the appended claims.

Further Embodiments are set out in the following clauses:
Clause 1. An apparatus for protecting a memory, the apparatus comprising:
   a monitoring unit configured to monitor pieces of status data of an integrated circuit (IC) chip; and
   a processor configured to analyze the status data monitored by the monitoring unit to detect a cold boot attack on the IC chip and protect a memory in the IC chip from the cold boot attack according to a detection result.
Clause 2. The apparatus of clause 1, wherein the monitoring unit monitors at least one of power consumption, current consumption, voltage changes, and system performance changes of the IC chip.
Clause 3. The apparatus of clause 1 or clause 2, wherein the processor compares each pattern of the status data with a setting pattern set for each pattern to extract similarity and detects the cold boot attack according to the similarity.
Clause 4. The apparatus of clause 3, wherein, when the similarity of at least one of the pieces of status data is greater than or equal to a preset reference value, the processor determines that the cold boot attack has been made.
Clause 5. The apparatus of clause 1 or clause 2, wherein the processor compares the status data with a critical range preset for each status data to detect the cold boot attack according to a comparison result;
Clause 6. The apparatus of clause 5, wherein, when at least one of the pieces of status data is out of the critical range, the processor determines that the cold boot attack has been made.
Clause 7. The apparatus of any preceding clause, wherein, when the cold boot attack is detected, the processor increases a temperature of the IC chip;
Clause 8. The apparatus of clause 7, wherein the processor overclocks the IC chip.
Clause 9. The apparatus of any preceding clause, wherein, when the cold boot attack is detected, the processor protects data of the memory in the IC chip.
Clause 10. The apparatus of clause 9, wherein the processor replaces the data of the memory in the IC chip with null data.
Clause 11. A method of protecting a memory, the method comprising:
   monitoring, by a monitoring unit, pieces of status data of an integrated circuit (IC) chip;
   analyzing, by a processor, the pieces of status data monitored by the monitoring unit to detect a cold boot attack on the IC chip; and
   protecting, by the processor, a memory in the IC chip from the cold boot attack according to a detection result.
Clause 12. The method of clause 11, wherein, in the monitoring of the pieces of status data of the IC chip, the monitoring unit monitors at least one of power consumption, current consumption, voltage changes, and system performance changes of the IC chip.
Clause 13. The method of clause 11 or clause 12, wherein, in the detecting of the cold boot attack, the processor compares each pattern of the pieces of status data with a setting pattern set for each pattern to extract similarity and detects the cold boot attack according to the similarity.
Clause 14. The method of clause 13, wherein, in the detecting of the cold boot attack, when the similarity of at least one of the pieces of status data is greater than or equal to a preset reference value, the processor determines that the cold boot attack has been made.
Clause 15. The method of clause 11 or clause 12, wherein, in the detecting of the cold boot attack, the processor compares the status data with a critical range set for each status data to detect the cold boot attack according to a comparison result;
Clause 16. The method of clause 15, wherein, in the detecting of the cold boot attack, when at least one of the pieces of status data is out of the critical range, the processor determines that the cold boot attack has been made.
Clause 17. The method of any one of clauses 11 - 16, wherein, in the protecting of the memory of the IC chip, when the cold boot attack is detected, the processor increases a temperature of the IC chip.
Clause 18. The method of clause 17, wherein, in the protecting of the memory of the IC chip, the processor overclocks the IC chip.
Clause 19. The method of any one of clauses 11 - 18, wherein, in the protecting of the memory of the IC chip, when the cold boot attack is detected, the processor protects data of the memory in the IC chip.
Clause 20. The method of clause 19, wherein, in the protecting of the memory of the IC chip, the processor replaces the data of the memory in the IC chip with null data.

## Claims

1. An apparatus for protecting a memory, the apparatus comprising:
a monitoring unit configured to monitor pieces of status data of an integrated circuit (IC) chip; and
a processor configured to analyze the status data monitored by the monitoring unit to detect a cold boot attack on the IC chip and protect a memory in the IC chip from the cold boot attack according to a detection result.

2. The apparatus of claim 1, wherein the monitoring unit is configured to monitor at least one of power consumption, current consumption, voltage changes, and system performance changes of the IC chip.

3. The apparatus of claim 1 or claim 2, wherein the processor is configured to compare each pattern of one or more patterns of the pieces of status data with a setting pattern set for each pattern to extract similarity and is configured to detect the cold boot attack according to the similarity;
wherein, optionally, when the similarity of at least one of the pieces of status data is greater than or equal to a preset reference value, the processor determines that the cold boot attack has been made.

4. The apparatus of claim 1 or claim 2, wherein the processor is configured to compare the pieces of status data with a critical range preset for each status data to detect the cold boot attack according to a comparison result;
wherein, optionally, when at least one of the pieces of status data is out of the critical range, the processor determines that the cold boot attack has been made.

5. The apparatus of any preceding claim, wherein, when the cold boot attack is detected, the processor is configured to increase a temperature of the IC chip;
wherein, optionally, the processor is configured to overclock the IC chip to increase the temperature of the IC chip.

6. The apparatus of any preceding claim, wherein, when the cold boot attack is detected, the processor is configured to protect data of the memory in the IC chip.

7. The apparatus of claim 6, wherein the processor is configured to replace the data of the memory in the IC chip with null data.

8. A method of protecting a memory, the method comprising:
monitoring, by a monitoring unit, pieces of status data of an integrated circuit (IC) chip;
analyzing, by a processor, the pieces of status data monitored by the monitoring unit to detect a cold boot attack on the IC chip; and
protecting, by the processor, a memory in the IC chip from the cold boot attack according to a detection result.

9. The method of claim 8, wherein, in the monitoring of the pieces of status data of the IC chip, the monitoring unit monitors at least one of power consumption, current consumption, voltage changes, and system performance changes of the IC chip.

10. The method of claim 11 or claim 12, wherein, in the detecting of the cold boot attack, the processor compares each pattern of the pieces of status data with a setting pattern set for each pattern to extract similarity and detects the cold boot attack according to the similarity.
wherein, optionally, in the detecting of the cold boot attack, when the similarity of at least one of the pieces of status data is greater than or equal to a preset reference value, the processor determines that the cold boot attack has been made.

11. The method of claim 8 or claim 9, wherein, in the detecting of the cold boot attack, the processor compares the status data with a critical range set for each status data to detect the cold boot attack according to a comparison result;
wherein, optionally, in the detecting of the cold boot attack, when at least one of the pieces of status data is out of the critical range, the processor determines that the cold boot attack has been made.

12. The method of any one of claims 8 - 11, wherein, in the protecting of the memory of the IC chip, when the cold boot attack is detected, the processor increases a temperature of the IC chip.

13. The method of claim 12, wherein, in the protecting of the memory of the IC chip, the processor overclocks the IC chip to increase the temperature of the IC chip.

14. The method of any one of claims 8 - 13, wherein, in the protecting of the memory of the IC chip, when the cold boot attack is detected, the processor protects data of the memory in the IC chip.

15. The method of claim 14, wherein, in the protecting of the memory of the IC chip, the processor replaces the data of the memory in the IC chip with null data.
